# EUROPEAN PATENT APPLICATION

(11) **EP 3 712 789 A1**
(43) Date of publication of application: **23.09.2020**
(21) Application number: 19164539.9
(22) Date of filing: 22.03.2019
(51) Int. Cl.: G06F 21/10, G06F 21/64, H04L 9/32, H04L 29/06, H04L 29/08, H04W 4/70

(54) **METHOD AND ADMINISTRATION DEVICE FOR ADMINISTRATING CODE ARTIFACTS FOR AN INDUSTRIAL SYSTEM**

(71) Applicant: Siemens Aktiengesellschaft, 80333 München (DE)
(72) Inventor: Scholz, Andreas, 85716 Unterschleißheim (DE); Wimmer, Martin, 85579 Neubiberg (DE)

(57) **Abstract**

A method for administrating code artifacts for an industrial system including an administration device and a number of customers each having a number of industrial units is proposed, the method comprising: providing a certain code artifact for a number of the industrial units from a code developer to the administration device, uploading a generated certification document for the certain code artifact by a validator to the administration device, the generated certification document including a digital signature being generated by using a private key of the validator and a number of attributes for the certain code artifact, validating the uploaded certification document by the administration device using a public key of the validator, and providing, by the administration device, the validated certification document, and particularly the certain code artifacts, to the customers.

## Description

The present invention relates to method and to computer program product for administrating code artifacts for an industrial system including a number of customers each having a number of industrial units. Moreover, the present invention relates to an administration device for administrating code artifacts for an industrial system and to such an industrial system. In particular, code artifacts relate to applications (apps), application artifacts, industrial IoT applications, binaries for applications, programs and/or executable scripts.

Nowadays, not only in the consumer space, but also in industrial systems, like industrial IoT ecosystems, such as Mind-Sphere, applications may be used in the industrial space, like in industrial units, e.g. CNC machines of the customers. In the context of industrial IoT ecosystems, applications may run on backend environments, e.g. directly integrated in the IoT ecosystems, on customers' IT infrastructures, interacting with an IoT platform and customers' IT system, e.g. ERP systems, and also on customers' devices, like CNC machines, which represent "things" that are connected to an IoT backend.

In any case, such applications may be provided by different providers or code developers providing such applications. These code developers may include IoT platform providers, machine builders, engineering specialists and the like. Those applications typically bear high complexity, as they are not only running on a self-contained device, but are integrated in the IT and/or OT environment of the customers and therefore are part of the customers' IT/OT environments, e.g. production lines. The present focus is more on protecting OT. Here, availability and system integrity usually are the main concerns.

The following example may illustrate problems of a conventional system. A conventional system may include an IT network and an OT network coupled by an edge device. As part of the IT network, a storage may be used for storing applications for devices or industrial units of the OT network, like controllers or machines.

In case of installing applications on the industrial units of the OT device or the edge device bridging the IT network and the OT network, integrity and quality of the applications need to be ensured so that the integrity of the overall system is not affected negatively. For ensuring integrity and quality of applications, policies may be used. Such policies are typically use case or domain-specific, i.e. customers might have custom- and domain-specific policies describing acceptance criteria for certain applications so that there is no one-size-fits-all policy that can be applied in general.

In particular, vulnerabilities of applications or malicious applications may lead to significant harm of industrial systems and - depending on the domain - may have an impact on production or even safety. Higher level of complexity is also given because of a quite heterogeneous ecosystem with multiple actors, including a plurality of customers like device builders, machine builders, system builders or integrators, app consumers, like industrial units, and code developers for developing and contributing applications.

As mentioned above, moreover, with the different kinds of applications, also the complexity of applications is usually higher compared to consumer cases. In addition, the level of assurance, i.e. when is an application considered trustworthy, varies depending on the domains they are to be employed in, e.g. industry automation, energy automation, healthcare or the like. That means that a central policy, for example managed by an app store provider, is not practical.

Document US 2018/0184250 A1 describes validating mobile applications for accessing regulated content. Allowing access to regulated content (e.g., FDA regulated) via mobile devices can increase operational efficiency of companies that have this type of content, and allow users to quickly interact with this content even when outside of the company office. Yet, mobile devices present security issues in ensuring that the integrity of the regulated content is maintained. A regulated content management system applies a multi-step validation and authentication process to allow mobile access to regulated content. The system validates a mobile application installed on the device for regulated content access, the mobile device itself, and the credentials of the user trying to access the content before access is granted. This thus provides users with access to regulated content in a mobile environment while maintaining the integrity of the regulated content.

It is an objective of the present invention to enhance the administrating of code artifacts for an industrial system.

According to a first aspect, a method for administrating code artifacts for an industrial system including an administration device and a number of customers each having a number of industrial units is proposed. The method comprises steps a) to d) :
a) providing a certain code artifact for a number of the industrial units from a code developer to the administration device,
b) uploading a generated certification document for the certain code artifact by a validator to the administration device, the generated certification document including a digital signature being generated by using a private key of the validator and a number of attributes for the certain code artifact,
c) validating the uploaded certification document by the administration device using a public key of the validator, and
d) providing, by the administration device, the validated certification document, and particularly the certain code artifacts, to the customers.

In particular, the code artifact includes an application, an application artifact, an industrial IoT application, a binary for an application, a program and/or an executable script. Moreover, the code artifact may also be referred to as app in the following. Providing the validated certification document to the customers may also include to generate a further certification document based on the contents of the received certification document or certification documents. The generated further certification document may be signed by the administration device and may be provided to the customers.

The administration device may be also referred to as trusted third party for administrating said code artifacts. Said customers may include device builders, machine builders, system builders or integrators and/or app consumers. The industrial units of each of the customers may include sensors, actors, controllers, transceivers and machines, like CNC machines.

By using the present method, code artifacts and allocated certification documents can be managed and provided, in particular for the customers and their industrial units. The administration device may include a plurality of APIs (API: Application Programming Interface) for coupling the customers, the code developers and the validators. In short, the group of customers, code developers and validators may be referred to as participants of the industrial system or ecosystem. The above-mentioned APIs allow the given participants of the industrial ecosystem to model trust relationships, specify validation results in a digital manner and to express under which circumstances, e.g. defined by policies, a certain app may be downloaded and used by a certain industrial unit of a certain customer.

The present method supports app validation for the industrial system. In particular, the present method may be applied in those cases where single-instance app management cannot be realized. In particular, in such an industrial use case, apps may be provided from a plurality of different code developers or code providers. In such a scenario, the administration device may offer an independent service for quality evaluation of such apps.

Moreover, the present method provides high scalability as the number and type of used validators and therefore used validation checks may be adjusted flexibly. Further, the present method provides a benefit in load balancing. Instead of performing quality checks and/or policy evaluation tasks for a certain app on a certain device having less computational power, the processing may be shifted to a centrally managed and hosted administration device. In particular, the administration device represents a trusted third party. Therewith, the configuration and management efforts from the point of view of customers can be reduced and scaling effects can be leveraged: instead of having to establish trust to multiple independent validation authorities, only one trust relationship would be sufficient.

According to an embodiment, the method comprises a step of uploading, from a number M of validators, a plurality N of certification documents for the certain code artifact to the administration device, with M ≤ N. Each of the validators may evaluate and attest quality attributes of a certain application that can, for instance, be security, performance or scalability of the application.

Therefore, it is possible to attach multiple certification documents to one code artifact or app. Each of the validators may provide a number of a plurality of certification documents, in particular over time. For example, over its lifetime, a certain code artifact may therefore accumulate a whole bunch of certification documents.

In some embodiments, the certification documents may have an issuer-defined visibility, e.g. they might only be visible to a specific customer or company, in particular if it applies some special policies or rules that are proprietary or even confidential to said specific company. In particular, a policy may inter alia include a set of rules and/or conditions (e.g., a policy is applied if device types are ...).

According to a further embodiment, the number of attributes includes right attributes, security attributes, safety attributes, use attributes, quality attributes, a lifetime of the code artifact, a lifetime of the certification document, a first specification specifying to which releases of the code artifact the certification document applies to, a second specification specifying to which revisions of a certain industrial unit the certification document applies to, a number of dynamic properties, and/or a validation result showing a result of a validation of the certain code artifact.

For example, the right attributes may define execution rights or downloading rights for the certain code artifact. Moreover, the security attributes may define a certain security level for downloading and/or executing the certain code artifact. The safety attributes may define certain safety or security requirements for the environment the certain code artifact shall be deployed in. The quality attributes may include certain compliance levels for use of a certain code artifact. Moreover, the use attributes may define properties that specify in which scenarios they are applicable, e.g. referring to certain versions of code artifacts, versions of firmware, or even customers. The dynamic properties may define certain update cycles for the code artifact. The dynamic properties may be evaluated at the time of installation of the certain code artifact or even regularly during run time. For example, such a dynamic property of a certain certification document may specify that it is only safe to run the code artifact during off-hours, but not during production time. A further example may refer to an environment configuration of the industrial unit using the code artifact, e.g. specifying that the code artifact may only be run behind a proxy server and not exposed to the internet directly.

According to a further embodiment, the steps a) to d) are executed for a plurality of different code artifacts.

Thus, the present administration device is adapted to manage a plurality of different code artifacts, provided by a plurality of different code developers and consumed by a plurality of different customers, i.e. app consumers.

According to a further embodiment, the certain code artifact is only downloaded to a requesting customer, if the attributes of the certain code artifact match with a customer-specific policy of the requesting customer.

The administration device may be adapted to validate the attributes of the certain code artifact against the certain customer-specific policy of the requesting customer and, only if said validation is positive, the requested certain code artifact is downloaded to the requesting customer.

According to a further embodiment, in a repository allocated to the administration device, a plurality of code artifacts, a plurality of certification documents, each of the certification documents being allocated to one of the code artifacts, and a number of customer-specific policies, each of the policies being allocated to one of the customers and describing acceptance criteria for code artifact installation, are stored.

The repository may be embodied as a storage. Said storage may include an internal storage device and/or external storage device. The internal storage device is integrated in the administration device, particularly. In contrast, the external storage device is external, i.e. not part of the administration device. The external storage device may include a cloud storage service.

According to a further embodiment, each of the customer-specific policies includes
first requirements for an authenticity of the code developer,
second requirements for certain checks of the code artifact, and/or
performance characteristics of the code artifact, of the industrial units of the customer and/or of a network environment of the customer.

According to a further embodiment, a whitelist is used that indicates or shows all those validators that are allowed to validate the certain code artifact.

In particular, the whitelist may be a dynamic list. The dynamic whitelist may be re-configured over time, in particular by the administration device.

According to a further embodiment, the administration device includes a repository for publishing and provisioning the code artifacts and an attestation device for attestating attributes of the code artifacts. In particular, the repository and the attestation device are coupled via network, e.g. an intranet or the internet.

The repository or app repository may represent a core component of an app marketplace supporting the publishing and provisioning of applications. The code developers, also referred to as app developers or developers, may upload their applications which can then be provided to the customers or consumers. The respective customer may acquire a license for a certain app from the app marketplace. The customer can then deploy and use the application depending on the used architecture that could mean that the app is deployed on the IoT platform of the customer itself, e.g. hosted on a cloud-based platform, deployed on the customer's own IT infrastructure or deployed on an industrial unit in the field, e.g. on an edge device.

The attestation device may be also referenced as attestation authority. The attestation device may represent a trusted party for the app consumers. In particular, the attestation device provides the following functionalities:
a) collection of validation results, and
b) evaluation of policies

Regarding collection of validation results, it may be noted that many quality validation steps are performed either by the attestation device itself or by any external validator.

Regarding evaluation of policies, it may be noted that this means that quality characteristics of a certain app are evaluated against a certain customer-specific policy.

The validators or validation providers may evaluate and attest quality attributes of a certain application that can, for instance, be security, performance or scalability of an application. In particular, a validator may be a trusted third party, like an anti-virus scanning solution. The validator is trusted to the administration device. Moreover, the administration device is trusted to each of the customers. As a result, there is a trust relation between the customers and the validators. Therefore, the configuration and management efforts for the customers can be reduced and scaling effects can be leveraged.

According to a further embodiment, the attestation device is coupled to a plurality of different validators for providing different validation services in validating the certain code artifact to the attestation device, each validation service providing a validation result for the certain code artifact.

According to a further embodiment, the different validation services include software dependency analysis, vulnerability scanning, performance testing, penetration testing and/or open-source-software clearing.

According to a further embodiment, different validation results for the certain code artifact are collected by the attestation unit for providing at least parts of the attributes for the certain code artifact, wherein the attributes, after receipt of a request for the certain code artifact from a requesting customer, are evaluated against the customer-specific policy of the requesting customer.

Any embodiment of the first aspect may be combined with any embodiment of the first aspect to obtain another embodiment of the first aspect.

According to a second aspect, it is proposed a computer program product comprising a program code for executing the method described above of the first aspect or of one of the embodiments of the first aspect for administrating code artifacts for an industrial system, when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to a third aspect, an administration device for administrating code artifacts for an industrial system including a number of customers each having a number of industrial units is proposed. The administration device comprises:
a) a first receiver for receiving a certain code artifact for a number of the industrial units from a code developer,
b) a second receiver for receiving a generated certification document from a validator, the generated certification document including a digital signature being generated by using a private key of the validator and a number of attributes for the certain code artifact,
c) a validator for validating the received certification document using a public key of the validator, and
d) a provider for providing the validated certification document and particularly the certain code artifacts to the customers.

According to an embodiment, the provider may generate a further certification document based on the contents of the received certification documents. The provider may sign the generated further certification document using its private key and provide it to the customers. The generated further certification document may include a summary or a subset of the attributes of the received certification documents.

The embodiments and features described with reference to the method of the present invention apply mutatis mutandis to the administration device of the present invention. Specifically, the administration device of the present invention may be implemented to carry out the method of the present invention.

The respective entity or unit, e.g. the validator, may be implemented in hardware and/or in software. If said entity is implemented in hardware, it may be embodied as a device, e.g. as a computer or as a processor or as a part of a system, e.g. a computer system. If said entity is implemented in software it may be embodied as a computer program product, as a function, as a routine, as a program code or as an executable object.

According to a fourth aspect, an industrial system is suggested. The industrial system comprises a number of customers each having a number of industrial units and an administration device for administrating code artifacts according to the third aspect.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a flow chart of an embodiment of a method for administrating code artifacts for an industrial system;
- Fig. 2: shows a schematic diagram of a first embodiment of an industrial system including an administration device for administrating code artifacts;
- Fig. 3: shows a schematic diagram of an embodiment of a repository of the administration device of Fig. 2;
- Fig. 4: shows a schematic diagram of a second embodiment of an industrial system including an administration device for administrating code artifacts;
- Fig. 5: shows a schematic diagram of a workflow execution for the second embodiment of the industrial system of Fig. 4; and
- Fig. 6: shows a schematic diagram of a further embodiment of an administration device for administrating code artifacts for an industrial system.

In the Figures, like reference numerals designate like or functionally equivalent elements, unless otherwise indicated.

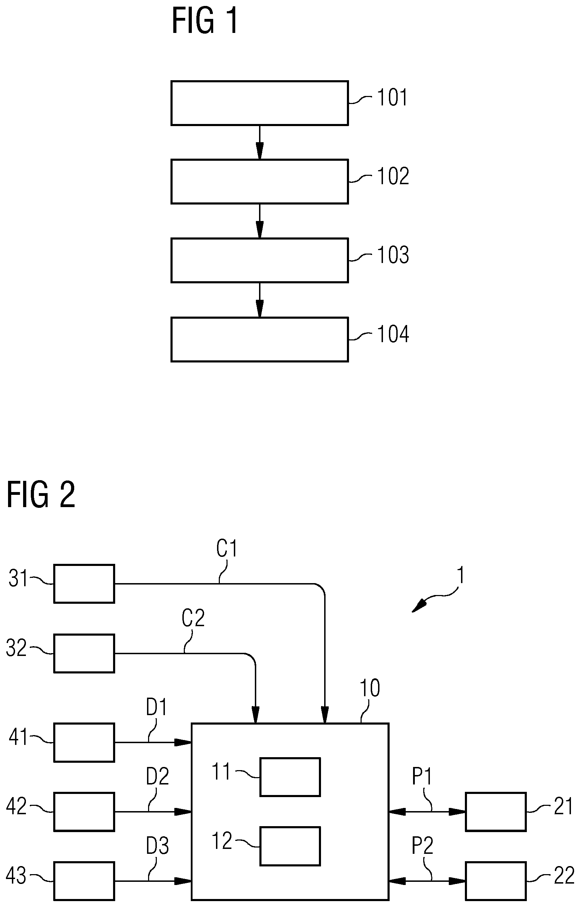

Fig. 1 shows a flow chart illustrating steps of a method for administrating code artifacts C1, C2 for an industrial system 1, and Fig. 2 shows a schematic diagram of such an industrial system 1 including an administration device 10 for administrating the code artifacts C1, C2. Reference will now be made to Fig. 1 and Fig. 2.

The administration device 10 of Fig. 2 has a repository 11 and an attestation device 12. The administration device 10 is coupled to a number of code developers 31, 32 for providing code artifacts C1, C2, to a number of customers 21, 22 and to a plurality of validators 41 - 43. Without loss of generality, Fig. 2 shows two customers 21, 22, two code developers 31, 32 and three validators 41, 42, 43.

The method of Fig. 1 may be executed using the administration device 10 of Fig. 2 and comprises the following method steps 101 - 104.

In step 101, a certain code artifact C1 is provided from a code developer 31 to the administration device 10. As an example, the code developer 31 of Fig. 2 provides the code artifact C1 which is suitable for a number of industrial units of the customers 21, 22 to the administration device 10. There may be a huge number of further code developers providing further code artifacts. In this regard, Fig. 2 shows that a second code developer 32 provides the code artifact C2 to the administration device 10. The provided code artifacts C1 and C2 may be stored in the repository 11 of the administration device 10.

In step 102, a generated certification document D1, D2 for the certain code artifact C1 is uploaded by a respective validator 41, 42 to the administration device 10. As an example, the validator 41 provides a first certification document D1 for the code artifact C1, the validator 42 provides a second certification document D2 for the code artifact C1, and the validator 43 provides a certification document D3 for the code artifact C2. Each of the generated certification documents D1, D2 for the certain code artifact, in the present example the code artifact C1, includes a digital signature being generated by using a private key of the validator 41 and a number of attributes for the certain code artifact C1. That means for the present example, the generated certification document D1 includes a digital signature being generated by using the private key of the validator 41 and the number of attributes for the certain code artifact C1. In an analogous way, the generated certification document D2 includes a digital signature being generated by using a private key of the validator 42 and also a number of attributes for the certain code artifact C1. In general terms, in step 102, a plurality of certification documents D1, D2 is uploaded for the certain code artifact C1 from a number M of validators 41, 42 to the administration device 10.

Said attributes being part of the respective generated certification document D1, D2, D3 may include right attributes, security attributes, safety attributes, use attributes, quality attributes, a lifetime of the code artifact, a lifetime of the certification document, a first specification specifying to which releases of the code artifact C1 the certification document D1, D2 applies to, a second specification specifying to which revisions of a certain industrial unit the certification document applies to, a number of dynamic properties and/or a validation result showing a result of a validation of the certain code artifact C1.

In step 103, the uploaded certification document D1, D2 is validated by the administration device 10, e.g. by the attestation device 12, using a public key of the validators 41, 42. That means, for validating the certification document D1, the public key of the validator 41 is used, wherein for validating the certification document D2, the public key of the validator 42 is used.

In step 104, the validated certification document D1, D2 is provided to the customers 21, 22. Said providing may be executed by the repository 11 and may include publishing and provisioning the code artifacts C1, C2 and the allocated certification documents D1, D2, D3.

It may be noted that the steps 101 to 104 may be executed for a plurality of different code artifacts C1, C2, as exemplarily indicated in Fig. 2.

The certain code artifact, for example the code artifact C1, is only downloaded to a requesting customer, e.g. the customer 21, if the attributes of the certain code artifact C1 match with a customer-specific policy P1 of the requesting customer 21. Each of the policies P1, P2 may be allocated to one of the customers 21, 22 and describes acceptance criteria for code artifact installation. As mentioned above, the policies P1, P2 are customer-specific. In the present example, the policy P1 is customer-specific for the customer 21 and the policy P2 is customer-specific for the customer 22.

As shown in Fig. 2, the respective customers 21, 22 provide their policies P1, P2 to the administration device 10.

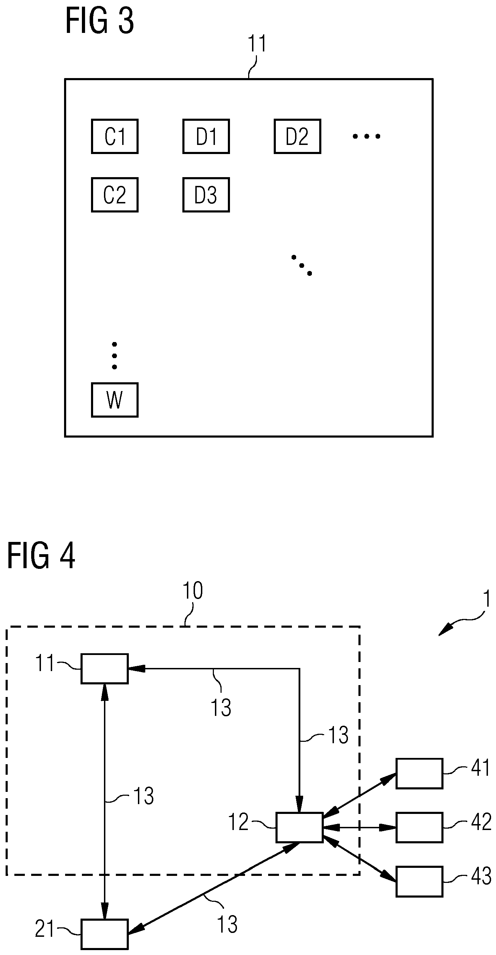

In particular, the repository 11 may store a plurality of code artifacts C1, C2, as exemplarily shown in Fig. 3, and a plurality of certification documents D1, D2, D3, each of the certification documents D1, D2, D3 being allocated to one of the code artifacts C1, C2, and the number of customer-specific policies P1, P2.

As shown in Fig. 3, the certification documents D1 and D2 are allocated to the code artifact C1, wherein the certification document D3, as discussed above, is allocated to the code artifact C2.

Each of the customer-specific policies P1, P2 may include first requirements for the authenticity of the code developer 31, 32, second requirements for certain checks of the code artifacts C1, C2, and performance characteristics of the code artifacts C1, C2 of the industrial units of the customers 21, 22 and/or the network environments of the respective customers 21, 22.

Furthermore, Fig. 3 shows that said repository may administrate a whitelist W. The whitelist W may indicate all those validators 41 - 43 that are allowed to validate a code artifact C1, C2. For example, the validators 41 and 42 are allowed to validate the code artifact C1, wherein the validator 43 is allowed to validate the code artifact C2, for example.

In Fig. 4, a schematic diagram of a second embodiment of an industrial system 1 including an administration device 10 for administrating code artifacts C1, C2 is depicted. The second embodiment of Fig. 4 is based on a first embodiment of Fig. 2 and includes all the features of said first embodiment.

The administration device 10 of Fig. 4 includes the repository 11 for publishing and provisioning the code artifacts C1, C2, C3 and the attestation device 12 for attesting attributes of the code artifacts C1, C2.

As shown in Fig. 4, the repository 11 and attestation device 12 are coupled via a network 13. Thus, the repository 11 and the attestation device 12 are not integrated in a common device.

As shown in Fig. 4, the attestation device 12 is coupled to a plurality of different validators 41 - 43 for providing different validation services for validating the certain code artifact, in the present example the code artifact C1, to the attestation device 12.

Each validation service provides a validation result for the certain code artifact C1. The different validation services may include software dependency analysis, vulnerability scanning, performance testing, penetration testing and open-source-software clearing.

The attestation unit 12 collects the different validation results for the certain artifact C1. Based on the collected validation results, the attestation unit 12 provides at least a part of the attributes for the certain code artifact C1.

Upon receipt of a request for the certain code artifact C1 from a requesting customer 21, the attestation unit 12 evaluates the attributes of the certain code artifact C1 against the customer-specific policy P1 of the requesting customer 21.

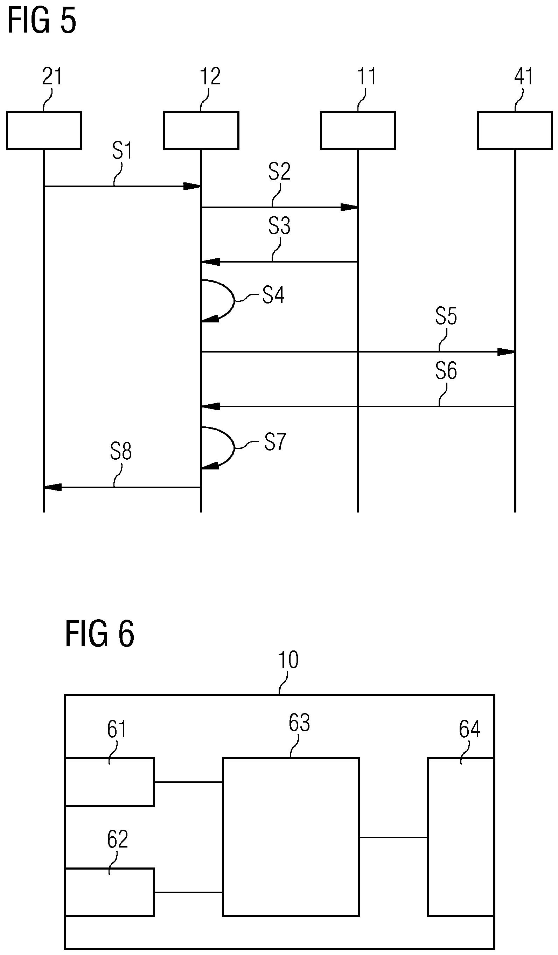

In Fig. 5, a schematic diagram of a workflow execution for the second embodiment of the industrial system 1 of Fig. 4 is depicted. The workflow execution of Fig. 5 shows eight steps which are executed between the following participants (from left to right): requesting customer 21, attestation device 12, repository 11 and validator 41. Said steps of the workflow execution are numbered by numbers S1 to S8 in Fig. 5.

In step S1, the requesting customer 21 posts a validation request for a certain code artifact, e.g. for an app, to the attestation device 12. The validation request may include an identifier for the app, e.g. a unique identifier or a cryptographic hash value. Moreover, the requesting customer 21 may provide his policy P1.

In step S2, the attestation device 12 reaches out to the repository 11 to acquire the binaries that correspond to the identifier of the app.

In step S3, the repository 11 extracts the corresponding binaries from its local database and returns it to the calling attestation device 12.

The following steps S4 to S6 may be executed in a loop to query relevant validation providers 41 - 43. Without loss of generality, Fig. 5 shows the validator 41 as an example for the relevant validation providers.

In step S4, the attestation device 12 determines the required checks by parsing the underlying policy P1 of the requesting customer 21. The check specification may be used in order to identify the relevant validators, in the present example the validator 41, to whom the attestation device 12 needs to reach out in order to get individual validation results.

In step S5, the relevant validation providers, here the validator 41, are queried for validation results of the present app.

In step S6, validation reports are returned to the attestation device 12, if available. Said validation reports may include metadata, e.g. describing a used engine, execution times and the like.

In step S7, when all validation reports are available, the attestation device 12 evaluates the requested policy P1 of the requesting customer 21 and determines an overall attestation result for the called app.

In step S8, the overall attestation result is sent back to the requesting customer 21.

In particular, as an underlying principle for providing proof of validations, private/public key cryptography and digital signatures may be used by the participants of Fig. 5. In particular, trust between the following affected entities may be established: The consumer 21 trusts the attestation device 12 and the repository 11. The attestation device 12 trusts the repository 11 and the validators 41 (42 and 43).

By use of the attestation device 12, the customer 21 delegates trust also to the subsidiary validators 41 to 43 which are potentially not directly known to the customer 21.

Fig. 6 shows a schematic diagram of a further embodiment of an administration device 10 for administrating code artifacts C1, C2 for an industrial system 1.

The administration device 10 of Fig. 6 includes a first receiver 61, a second receiver 62, a validator 63 and a provider 64.

The first receiver 61 is configured to receive certain code artifacts C1, C2 for a number of industrial units from code developers 31, 32 (see Fig. 2).

The second receiver 62 is configured to receive generated certification documents D1, D2, D3, each of the generated certification documents D1, D2, D3 including a digital signature being generated by using a private key of the validators 41, 42, 43 and a number of attributes for the certain code artifacts C1, C2.

The validator 63 is configured to validate the received certification documents D1, D2, D3 using public keys of the respective validators 41, 42, 43.

Moreover, the provider 64 is configured to provide the validated certification documents D1, D2, D3 and particularly the certain code artifacts C1, C2 to the customers 21, 22. Furthermore, the provider 64 may generate a further certification document based on the contents of the received certification documents D1, D2, D3. The provider 64 may sign the generated further certification document using its private key and provide it for the customers 21, 22. The generated further certification document may include a summary or a subset of the attributes of the received certification documents D1, D2, D3.

Although the present invention has been described in accordance with an exemplary embodiment, an exemplary use case and preferred variants thereof, it is obvious for the person skilled in the art that modifications are possible in all embodiments, use cases and variants.

### Reference Numerals:

- 1: industrial system
- 10: administration device
- 11: repository
- 12: attestation device
- 13: network
- 21: customer
- 22: customer
- 31: code developer
- 32: code developer
- 41: validator
- 42: validator
- 43: validator
- 61: first receiver
- 62: second receiver
- 63: validator
- 64: provider
- 101 - 104: method steps

- C1: code artifact
- C2: code artifact
- D1: certification document
- D2: certification document
- D3: certification document
- P1: policy
- P2: policy
- S1 - S8: workflow execution steps
- W: whitelist

## Claims

1. A method for administrating code artifacts (C1, C2) for an industrial system (1) including an administration device (10) and a number of customers (21, 22) each having a number of industrial units, the method comprising:
a) providing (101) a certain code artifact (C1) for a number of the industrial units from a code developer (31) to the administration device (10),
b) uploading (102) a generated certification document (D1, D2) for the certain code artifact (C1) by a validator (41, 42) to the administration device (10), the generated certification document (D1, D2) including a digital signature being generated by using a private key of the validator (41, 42) and a number of attributes for the certain code artifact (C1),
c) validating (103) the uploaded certification document (D1, D2) by the administration device (10) using a public key of the validator (41, 42), and
d) providing (104), by the administration device (10), the validated certification document (D1, D2) to the customers (21, 22).

2. The method of claim 1,
**characterized by**
uploading, from a number M of validators (41, 42), a plurality N of certification documents (D1, D2) for the certain code artifact (C1) to the administration advice (10), with M ≤ N.

3. The method of claim 1 or 2,
**characterized in**
**that** the number of attributes includes
right attributes,
security attributes,
safety attributes,
use attributes,
quality attributes,
a lifetime of the code artifact,
a lifetime of the certification document,
a first specification specifying to which releases of the code artifact the certification document (D1, D2) applies to,
a second specification specifying to which revisions of a certain industrial unit the certification document (D1, D2) applies to,
a number of dynamic properties, and/or
a validation result showing a result of a validation of the certain code artifact (C1).

4. The method of any of claims 1 to 3,
**characterized in**
**that** steps a) to d) are executed for a plurality of different code artifacts (C1, C2).

5. The method of any of claim 1 to 4,
**characterized in**
**that** the certain code artifact (C1) is only downloaded to a requesting customer (21), if the attributes of the certain code artifact (C1) match with a customer-specific policy (P1) of the requesting customer (21).

6. The method of any of claims 1 to 5,
**characterized in**
**that**, in a repository (11) allocated to the administration device (10), a plurality of code artifacts (C1, C2), and a plurality of certification documents (D1, D2, D3), each of the certification documents (D1, D2, D3) being allocated to one of the code artifacts (C1, C2), are stored.

7. The method of claim 6,
**characterized in**
**that** each of the customer-specific policies (P1, P2) includes
first requirements for an authenticity of the code developer (31, 32),
second requirements for certain checks of the code artifact (C1, C2), and/or
performance characteristics of the code artifact (C1, C2), of the industrial units of the customer (21, 22) and/or of a network environment of the customer (21, 22).

8. The method of any of claims 1 to 7,
**characterized by**
a whitelist (W) indicating all those validators (41-43) that are allowed to validate the certain code artifact (C1, C2).

9. The method of any of claims 1 to 8,
**characterized in**
**that** the administration device (10) includes a repository (11) for publishing and provisioning the code artifacts (C1, C2, C3) and an attestation device (12) for attestating attributes of the code artifacts (C1, C2), in particular the repository (11) and the attestation device (12) being coupled via network (13).

10. The method of claim 9,
**characterized in**
**that** the attestation device (12) is coupled to a plurality of different validators (41-43) for providing different validation services in validating the certain code artifact (C1) to the attestation device (12), each validation service providing a validation result for the certain code artifact (C1).

11. The method of claim 10,
**characterized in**
**that** different validation results for the certain code artifact (C1) are collected by the attestation unit (12) for providing at least a part of the attributes for the certain code artifact (C1),
wherein the attributes, after receipt of a request for the certain code artifact (C1) from a requesting customer (21), are evaluated against the customer-specific policy (P1) of the requesting customer (21).

12. A computer program product comprising a program code for executing the method of any of claims 1 to 11 when run on at least one computer.

13. An administration device (10) for administrating code artifacts (C1, C2) for an industrial system (1) including a number of customers (21, 22) each having a number of industrial units, the administration device (10) comprising:
a) a first receiver (61) for receiving a certain code artifact (C1, C2) for a number of the industrial units from a code developer (31, 32),
b) a second receiver (62) for receiving a generated certification document (D1, D2, D3) from a validator (41, 42), the generated certification document (D1, D2, D3) including a digital signature being generated by using a private key of the validator (41, 42, 43) and a number of attributes for the certain code artifact (C1, C2),
c) a validator (63) for validating the received certification document using a public key of the validator (41, 42, 43), and
d) a provider (64) for providing the validated certification document (D1, D2, D3) to the customers (21, 22).

14. The administration device of claim 13,
**characterized in**
**that** the provider (64) is configured to generate a further certification document based on the contents of the received certification documents (D1, D2, D3), wherein the generated further certification document includes a summary or a subset of the attributes of the received certification documents (D1, D2, D3), wherein the provider (64) is configured to sign the generated further certification document using its private key and to provide it for the customers 21, 22.

15. An industrial system (1) comprising a number of customers (21, 22) each having a number of industrial units and an administration device (10) for administrating code artifacts (C1, C2) according to claim 14.
